# EUROPÄISCHE PATENTSCHRIFT

(11) **EP 0 574 960 B1**
(45) Veröffentlichungstag und Bekanntmachung des Hinweises auf die Patenterteilung: **13.09.1995**
(21) Anmeldenummer: 93113018.1
(22) Anmeldetag: 13.02.1991
(51) Int. Cl.: H02K 21/38

(54) **Elektrischer Rotationsmotor**
Electric rotating motor
Moteur électrique rotatif

(30) Priorität: 16.02.1990 DE 4005045
(43) Veröffentlichungstag der Anmeldung: 22.12.1993
(62) Teilanmeldung aus: 91102029.5
(73) Patentinhaber: Mehnert, Walter, Dr., D-85521 Ottobrunn (DE)
(72) Erfinder: Mehnert, Walter, Dr., D-85521 Ottobrunn (DE)
(74) Vertreter: Strasser, Wolfgang, Dipl.-Phys

(56) Entgegenhaltungen:
- CH-A- 251 509
- DE-C- 948 715
- DE-C- 1 008 394
- DE-C- 1 008 394
- FR-A- 513 515
- FR-A- 513 515

## Beschreibung

Die Erfindung betrifft einen elektrischen Rotationsmotor gemäß dem Oberbegriff von Anspruch 1.

Herkömmliche elektrische Rotationsmotoren, die eine Spulen- und eine Magnetanordnung umfassen, sind im allgemeinen so aufgebaut, daß die eine dieser beiden Anordnungen drehfest mit dem Stator und die andere drehfest mit dem Rotor verbunden ist. Dies führt dazu, daß der Rotor einen vergleichsweise komplizierten Aufbau erhält und die gesamte Anordnung sowohl hinsichtlich des Wirkungsgrades als auch der Baugröße nicht optimal ist.

Aus FR-A-513515 ist weiterhin ein elektrischer Rotationsmotor der im Oberbegriff des Anspruches 1 genannten Art bekannt, bei dem sowohl die Spulen- als auch die Magnetanordnung drehfest am Stator montiert ist und sich in den Magnetfeldern dieser beiden Anordnungen nur noch ein vergleichsweise einfacher, den Rotor bildender Körper aus ferromagnetischem Material dreht. Dabei ist aber die Spule einseitig oberhalb des Rotors positioniert und die gesamte Anordnung wird von zwei axial hintereinander befindlichen hufeisenförmigen Permanentmagneten umschlossen.

Demgegenüber liegt der Erfindung die Aufgabe zugrunde, einen Elektromotor der eingangs genannten Art so weiterzubilden, daß bei zumindest gleichbleibender abgebbarer Kraft bzw. abgebbarem Moment die Baugröße erheblich verringert werden kann.

Zur Lösung dieser Aufgabe sieht die Erfindung die im Anspruch 1 niedergelegten Merkmale vor.

Bei einem erfindungsgemäßen elektrischen Rotationsmotor wird somit ebenso wie bei dem Motor gemäß FR-A-5 13515 das den bekannten Elektromotoren ansonsten zugrundeliegende Prinzip aufgegeben, daß sich eine von Strom durchflossene Spule entweder allein oder gemeinsam mit einem sie durchsetzenden Kern aus ferromagnetischem Material relativ zum Feld einer Magnetanordnung bewegt. Stattdessen werden Spule und Magnet, der sowohl von einem Permanent- als auch einem Elektromagneten gebildet sein kann, zumindest in Richtung der zu erzeugenden Bewegung, im allgemeinen aber völlig unbeweglich miteinander verbunden, so daß zwischen diesen beiden Bestandteilen die vom Motor zu bewirkende Bewegung nicht stattfinden kann. Stattdessen wird in den Feldern von Spule und Magnet ein Körper aus ferromagnetischem Material so gelagert, daß er sich relativ zur Spulen-Magnet-Einheit drehen kann. Dabei kann die Spulen-Magnet-Einheit entweder als "Stator" oder als "Rotor" betrachtet werden, wobei dann der Körper aus ferromagnetischem Material das jeweilige Gegenstück bildet.

Damit die gewünschte Drehbewegung zustandekommt, weist der Körper aus ferromagnetischem Material einen Spalt auf, der sich sowohl quer zur Drehrichtung als auch in Längsrichtung so durch den Körper hindurcherstreckt, daß der Widerstand, den der Körper im Bereich des Spaltes einem magnetischen Fluß entgegensetzt, größer ist als der magnetische Widerstand, den die zwischen der Spulen-Magnet-Anordnung und dem Körper aus ferromagnetischem Material vorhandenen Lagerspalte bewirken. Zu diesem Zweck ist der Spalt zumindest über einen erheblichen Teil des Körperquerschnitts hinweg von einem nicht ferromagnetischem Material, das nicht unbedingt Luft sein muß, oder von Vakuum erfüllt. Alle diese Möglichkeiten werden hier kurz mit dem Begriff "Spalt" bezeichnet. Dies gilt auch für weiter unten noch genauer beschriebene, an anderen Stellen der erfindungsgemäßen Motoranordnung vorgesehene "Luftspalte".

Wesentlich ist, daß der den Körper aus ferromagnetischem Material durchziehende Spalt so angeordnet ist, daß sich durch seine Drehung bezüglich der Spulen-Magnet-Einheit der die Spule durchsetzende Magnetfluß ändert. Diese Bewegung kann dadurch hervorgerufen werden, daß auf den Reaktionsteil der Elektromaschine ein äußeres mechanisches Moment bzw. eine äußere mechanische Kraft einwirkt. Aufgrund dieser Bewegung ändert sich der die Spule durchsetzende Magnetfluß und, es wird in der Spule eine Spannung induziert, die an den Spulenanschlüssen abgegriffen werden kann. Dies stellt den Betrieb der erfindungsgemäßen Anordnung als Generator dar. Umgekehrt wird bei von außen durch die Spule geschicktem Strom zwischen der Spulen-Magnet-Einheit und dem Körper aus ferromagnetischem Material eine Kraft erzeugt, die bei vergleichbarer Baugröße um mehr als einen Faktor 2 größer ist als bei Elektromotoren herkömmlicher, vergleichbarer Art.

Eine besonders kompakte Bauform wird gemäß der Erfindung bei einem vorgegebenen zu erzeugenden Moment dadurch erzielt, daß die Anordnung gemäß dem Kennzeichnenden Teil von Anspruch 1 so aufgebaut wird, daß möglichst geringe magnetische Streufelder auftreten.

Alternativ können statt einer Spule auch zwei Spulen vorgesehen und so angeordnet werden, daß sich die Magnetanordnung zwischen ihnen befindet.

Die Kompaktere Bauform der Magnetanordnung hat weiterhin zur Folge, daß zur Erzielung gleicher Kraft der von ihn insgesamt ausgehende magnetische Fluß geringer ist. Damit können bei Verwendung einer magnetischen Rückschlußeinrichtung aus ferromagnetischem Material, die zur Erzielung eines guten Wirkungsgrades vorteilhaft ist, wesentlich geringere Materialstärken für diese Rückschlußeinrichtung und den Kern aus ferromagnetischem Material vorgesehen werden, ohne daß die Gefahr einer magnetischen Sättigung besteht. Diese verringerten Materialstärken führen nochmals zu Baugrößenverminderungen insbesondere in radialen Richtung.

Die eben besprochene Bauform ist besonders für einen Rotationsmotor geeignet, bei dem gemäß der Erfindung die Magnetanordnung wenigstens zwei Magnete umfaßt, die bezüglich der Längsachse des Kerns einander gegenüberliegend angeordnet sind und voneinander verschiedene Magnetisierungsrichtungen vor zugsweise derart besitzen, daß zu jedem betrachteten Zeitpunkt die Magnetisierungsrichtung wenigstens eines Magneten von außen zum Kern hin und wenigstens eines Magneten vom Kern weg nach außen gerichtet ist. Der bezüglich der Spulen- und Magnetanordnung drehbar gelagerte Kern weist dabei einen Spalt auf, der sich sowohl jeweils halbseitig quer zur Längsrichtung des Kerns als auch in dessen Längsrichtung vorzugsweise so weit erstreckt, daß er im zusammengebauten Zustand den axialen Abstand zwischen den beiden Spulen überbrückt.

Ein besonderer Vorteil der erfindungsgemäßen Maßnahmen besteht darin, daß das bewegliche Teil des Elektromotors der einfachste überhaupt denkbare Gegenstand, nämlich ein geschlitzter Eisenzylinder sein kann.

An den Übergangsstellen zwischen dem den Luftspalt aufweisenden Körper aus ferromagnetischem Material und den Jochen kann es sich als vorteilhaft erweisen, eine ferromagnetische Flüssigkeit, vorzugsweise auf Ölbasis einzubringen, um den Reibungskoeffizienten zu verringern, das Motorgehäuse nach außen abzudichten und vor allem die durch Exzentrizitäten entstehenden magnetischen Kräfte zu verringern.

Vorteilhafte Weiterbildungen und Ausgestaltungen des erfindungsgemäßen Elektromotors sind in den Unteransprüchen niedergelegt.

Die Erfindung wird im folgenden anhand von Ausführungsbeispielen unter Bezugnahme auf die Zeichnung erläutert; in dieser zeigt:
- Fig. 1: einen Vertikalschnitt durch einen erfindungsgemäßen Rotationsmotor,
- Fig. 2: einen Schnitt längs der Linie VII-VII durch den Rotationsmotor aus Fig. 1,
- Fig. 3: einen Schnitt längs der Linie VIII-VIII durch den Rotationsmotor aus Fig. 1,
- Fig. 4: eine perspektivische Ansicht der einen Hälfte des Kerns des Rotationsmotors aus Fig. 1, und
- Fig. 5: eine Anordnung aus zwei Rotationsmotoren gemäß Fig. 1 mit einem gemeinsamen Kern aus ferromagnetischem Material.

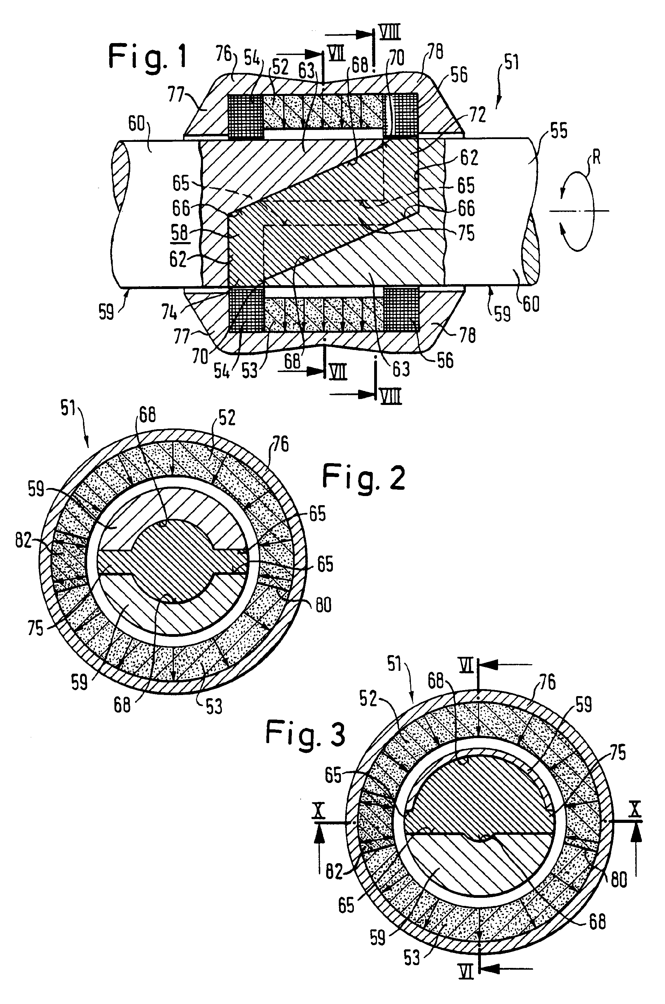

Der in den Figuren 1 bis 4 dargestellte Rotationsmotor 51 umfaßt eine Magnetanordnung, die aus wenigstens zwei Permanentmagneten 52, 53 besteht, von denen jeder die Form eines hohlen geraden Kreiszylinders besitzt, der längs einer Ebene halbiert ist, die die Längsachse enthält. Diese beiden gleichdimensionierten Halbzylinder sind so zusammengesetzt, daß sie sich zu einem geschlossenen Hohlzylinder mit kreisförmigen Innen- und Außenquerschnitt ergänzen. Wesentlich ist dabei, daß die beiden Halbzylinder einander entgegengesetzte Magnetisierungsrichtungen besitzen, wenn man eine optimale Ausnutzung der Maschine anstrebt. Verläßt man diese Prämisse, so können auch zwei Magnete, von denen jeder nur in etwa ein Viertel des Gesamtumfangs überdeckt, vorgesehen werden, die dann gleichsinnig magnetisiert sind. Während die Magnetflußrichtung des in den Figuren 1 bis 3 oberen Permanentmagneten 52 radial von außen nach innen verläuft, ist die des unteren Permanentmagneten 53 radial von innen nach außen gerichtet. Die Stärke der beiden Magneten 52, 53 ist gleich. Die Spulenanordnung umfaßt zwei Spulen 54, 56, die gleichdimensioniert und jeweils als gerader Hohlzylinder mit kreisförmigen Innen- und Außenquerschnitt ausgebildet sind. Die Spulen 54, 56, die im Betrieb gleichsinnig angesteuert werden, sind an den Stirnenden des von den beiden Permanentmagneten 52, 53 gebildeten Hohlzylinders so angeordnet, daß ihre Achsen mit dessen Längsachse fluchten. Somit wird auch hier ein in etwa kreiszylindrischer Innenraum gebildet, durch den sich ein Kern 55 aus ferromagnetischem Material erstreckt, der bezüglich der Spulen-Magnetanordnung drehbar gelagert ist, wie dies der Doppelpfeil R in Fig. 1 andeutet.

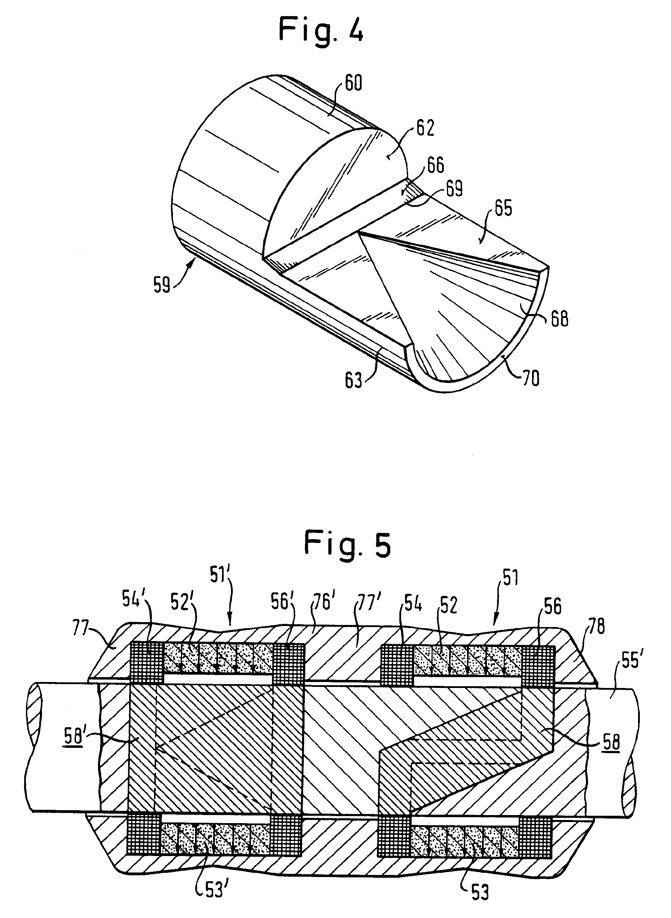

Durch den Kern 55 erstreckt sich ein Spalt 58, der dadurch gebildet wird, daß der Kern 55 aus zwei gleich ausgebildeten Hälften 59, 59 aufgebaut ist, die mit einem der axialen Länge einer der Spulen 54, 56 entsprechenden axialen Abstand angeordnet sind und jeweils die in Fig. 4 perspektivisch dargestellte Form aufweisen.

Jede der beiden Hälften 59, 59 des Kerns 55 besitzt einen im zusammengebauten Zustand axial außenliegenden kreiszylindrischen Abschnitt 60, an dessen nach innen weisende Stirnfläche 62 sich ein teilzylindrischer Abschnitt 63 anschließt. Diesen teilzylindrischen Abschnitt 63 kann man sich dadurch entstanden denken, daß von dem durch den kreiszylindrischen Abschnitt 60 definierten Vollzylinder ein Bereich längs einer Ebene weggeschnitten worden ist, die sich parallel zur Längsachse des Vollzylinders erstreckt und von dieser einen radialen Abstand aufweist. Dieser Abstand ist so bemessen, daß die Weite des betreffenden Abschnitts 75 des Spaltes 58, der sich im zusammengebauten Zustand zwischen den Hälften 59, 59 ergibt, etwa gleich der doppelten Weite des Luftspaltes zwischen dem Kern 55 und den Magneten 52, 53 ist.

Im Übergangsbereich zwischen einer ersten Rechtecksfläche 65, die die Flachseite des teilzylindrischen Abschnittes 63 bildet, und der Stirnfläche 62 des kreiszylindrischen Abschnittes 60 befindet sich eine weitere Rechtecksfläche 66, die sich über die ganze Breite des teilzylindrischen Abschnittes 63 erstreckt, eine im Vergleich zur ersten Rechtecksfläche 65 kleine axiale Länge besitzt und gegen die Ebene der ersten Rechtecksfläche 65 so geneigt ist, daß sie zur Stirnfläche 62 hin ansteigt.

Sie setzt dabei die Neigung der zentralen Mantellinie einer Teil-Kreiskegelfläche 68 fort, die als Vertiefung so in die erste Rechtecksfläche 65 eingearbeitet ist, daß ihre Achse parallel zur Längsachse der Kernhälfte 59 verläuft und ihre Spitze die zwischen der ersten Rechtecksfläche 65 und der weiteren Rechtecksfläche 66 gebildete Kante 69 berührt. An ihrer Basis ist die Teil-Kreiskegelfläche 68 so dimensioniert, daß das freie Stirnende 70 des teilzylindrischen Abschnitts 63 die Form eines schmalen Teilkreisringes besitzt.

Die in der eben beschriebenen Weise ausgebildeten Kernhälften 59, 59 werden im Innenraum der Spulen-Magnet-Anordnung mit dem oben erwähnten axialen Abstand so angeordnet, daß ihre Längsachsen miteinander fluchten und die ersten Rechtecksflächen 65, 65 einander parallel gegenüberliegen. Zwischen dem freien, teilkreisringförmigen Stirnende 70 einer jeden Hälfte 59 und der Stirnfläche 62 der jeweils anderen Hälfte ist ein axialer Abstand vorhanden, der vorzugsweise gleich der axialen Länge einer jeden der beiden Spulen 54, 56 ist. Der so aus den beiden Hälften 59, 59 aufgebaute und aufgrund der beschriebenen Ausbildung und Anordnung dieser Hälften 59, 59 einen Spalt 58 aufweisende Kern 55 aus ferromagnetischem Material ist in axialer Richtung so positioniert, daß jede der beiden Stirnflächen 62, 62 mit der axial außenliegenden Stirnseite der zugehörigen Spule 54 bzw. 56 fluchtet, während jedes der teilkreisringförmigen freien Stirnenden 70 in der gleichen Querschnittsebene liegt wie die axial innenliegende Stirnseite der zugehörigen Spule 54, 56.

Mit anderen Worten: Der Kern 55 aus ferromagnetischem Material wird hier von einem Spalt 58 durchzogen, der zwei Abschnitte 72, 74 umfaßt, die in etwa die Form einer Halbkreisscheibe besitzen, deren axiale Dicke etwa gleich der axialen Dicke der Spule 54 bzw. 56 ist und die sich im zusammengebauten Zustand im Bereich dieser beiden Spulen 54, 56 von einander gegenüberliegenden Seiten radial in den Kern 55 hineinerstrecken. Diese beiden radialen Abschnitte 72, 74 sind durch einen in Längsrichtung verlaufenden Abschnitt 75 verbunden, der, sieht man von den Teil-Kreiskegelflächen 68, 68 ab, im wesentlichen die Form eines flachen Quaders aufweist, der von den Rechtecksflächen 65, 65 begrenzt wird und sich quer durch den gesamten Kern 55 hindurcherstreckt. Die Teil-Kreiskegelflächen 68, 68, die der Erhöhung des magnetischen Widerstandes dienen und außerdem eine Materialersparnis und Gewichtsverminderung nach sich ziehen, haben zur Folge, daß auf die beiden Flachseiten dieses quaderförmigen Teils des Spaltes jeweils ein Teilkegel "aufgesetzt" ist. Wesentlich ist dabei, daß der Spalt 58 nicht nur radial verläuft, sondern sich auch in axialer Richtung über eine Länge erstreckt, die den axialen Abstand zwischen den beiden Spulen 54, 56 überbrückt.

Der Spalt kann wieder mit einem festen Material mit geringer magnetischer Permeabilität ausgefüllt sei, das die beiden Kernhälften zu einem Gesamtkörper verbindet und an den äußeren Grenzen des Spaltes so geformt und dimensioniert ist, daß der aus ihm und den beiden Kernhälften 59, 59 bestehende Gesamtkörper die Form eines durchgehenden geraden Kreiszylinders besitzt.

Die Rückführung des von den Permanentmagneten 52, 53 radial nach innen ausgehenden und im Kern 55 in Längsrichtung umgelenkten Magnetflusses erfolgt mit Hilfe eines die Magneten 52, 53 von außen umschließenden Mantels 76 und einer den Kern 55 mit dem Mantel 76 in radialer Richtung magnetisch verbindenden Jochanordnung, die aus zwei Jochen 77, 78 besteht, die im wesentlichen die Form von sich im Querschnitt radial nach außen verjüngenden Kreisscheiben mit jeweils einer zentralen durchgehenden Öffnung besitzen, von denen die eine am rechten und die andere am Linken Stirnende des Motors 51 angeordnet ist. Die beiden Joche 77, 78 sind mit dem Mantel 76 fest verbunden und bestehen wie er aus einem ferromagnetischen Material. Die Durchmesser der das Hindurchtreten des Kerns 55 durch die Joche 77, 78 ermöglichenden zentralen Öffnungen sind so bemessen, daß der zwischen dem Kern 55 und den Jochen 77, 78 gebildete Luftspalt zwar klein im Vergleich zum Spalt 58, aber groß im Vergleich zu den im Bereich der Spulen 54, 56 ausgebildeten Lagerspalten ist. Auf diese Weise wird erreicht, daß die aufgrund von Exzentrizitäten, auftretenden Reibungskräfte sehr klein gehalten werden. Die Weite des Luftspaltes, der zwischen dem Kern 55 und den ihn umgebenden Magneten 52, 53 vorhanden ist, ist größer als die Weite der Lagerspalte und insbesondere größer als die Weite der Luftspalte zwischen dem Kern 55 und den Jochen 77 und 78. Der kleinste Spalt ist zwischen den Spulen 54, 56 und dem Kern 55 vorhanden.

Durch die beschriebene Anordnung und Ausbildung des Spalts 58 wird erreicht, daß sich bei einer Drehung des Kerns 55 der die beiden Spulen 54, 56 durchsetzende Magnetfluß ändert. Wird die Anordnung als Generator betrieben, d.h. der Kern 55 durch das Einwirken eines äußeren mechanischen Drehmoments in Rotation versetzt, so entsteht an den Spulen 54, 56 eine Spannung, die immer dann sprungartig von plus nach minus oder umgekehrt wechselt (dφ/dt wechselt das Vorzeichen), wenn sich der quer durch den gesamten Kern 55 verlaufende, "quaderförmige" Abschnitt 75 des Spalts 58 über die Trennfuge 80 zwischen den beiden Permanentmagneten 52, 53 hinwegbewegt.

Wird umgekehrt im Motorbetrieb eine entsprechende pulsierende Spannung, die auf einfache Weise aus einer Gleichspannung erzeugt werden kann, an die Spulen 54, 56 ange legt, so wirkt auf den Kern 55 ein elektromagnetisch erzeugtes Drehmoment ein, das ihn in Rotation versetzt und nach außen abgegeben werden kann.

Um zu vermeiden, daß es beim Motorbetrieb zu Anlaufschwierigkeiten kommt, weil beim Anlegen der Spannung der Spalt 58 genau mit der Trennfuge 80 zwischen den beiden Magneten 52, 53 fluchtet, kann, wie dies in den Fig. 2 und 3 wiedergegeben ist, zwischen den beiden Permanentmagneten 52, 53 ein kleiner schaltbarer Magnete 82 vorgesehen sein, dessen Magnetisierungsrichtung mit Hilfe einer nicht dargestellten Wicklung so umgeschaltet werden kann, daß sie einmal parallel zur Magnetisierungsrichtung des Permanentmagneten 52 und einmal parallel zur Magnetisierungsrichtung des Permanentmagneten 53 ist. Dadurch kann eine Asymmetrie der Magnetanordnung erzeugt werden, die in jedem Fall ein sicheres Anlaufen in der jeweils gewünschten Richtung gewährleistet.

Eine andere Möglichkeit, ein eindeutiges Anlaufverhalten sicherzustellen und den erwähnten Leistungseinbruch zumindest prozentual zu reduzieren, besteht darin, zwei Rotationsmotoren 51, 51′ auf ein und denselben Kern 55′ einwirken zu lassen, der zwei um 90° gegeneinander verdrehte Spalte 58, 58′ aufweist. Die Trennflächen der Magneten 52, 53 bzw. 52′, 53′ der beiden Elektromotoren 51, 51′ liegen in der gleichen Ebene. Die in Fig. 5 gezeigten Teile wurden alle bereits beschrieben. Sie sind mit entsprechenden Bezugszeichen versehen, so daß ihr Aufbau und ihre Anordnung den obigen Erläuterungen entnommen werden kann.

Es sei darauf hingewiesen, daß der in Fig. 5 rechte Motor 51 vollständig in der gleichen Ebene geschnitten ist, wie der Motor 51 in Fig. 1 (siehe auch die Schnittlinie VI-VI in Fig. 3), während der gleiche Schnitt bezogen auf den Kern des in Fig. 5 linken Motors längs einer Ebene verläuft, die durch die Schnittlinie X-X in Fig. 3 angedeutet ist.

Die Magneten 52, 53, 52′, 53′ und die Spulen 54, 56 und 54′, 56′ sind unbeweglich miteinander verbunden und so angeordnet, daß ihre Längsachsen miteinander fluchten. Dadurch kann sich durch die in etwa kreiszylindrischen Innenräume beider Linearmotoren 51, 51′ ein gemeinsamer Kern 55′ erstrecken, der zwei zu seiner Längsrichtung quer verlaufende Spalte 58, 58′ aufweist. Der axiale Abstand dieser beiden Spalte 58, 58′ ist gleich dem axialen Abstand der beiden Elektromotoren 51, 51′, der beispielsweise durch den axialen Abstand der in Figur. 5 rechten Stirnflächen der beiden Permanentmagnete 52, 52′ definiert ist.

Die Spulen-Magnet-Anordnungen beider Elektromotoren 51, 51′ sind von einem gemeinsamen Mantel 76′ aus ferromagnetischem Material umgeben, der zusammen mit den Jochen 77, 77′, 78 für ein ringförmiges Schließen der Magnetflußlinien mit einem geringen magnetischen Widerstand sorgt, wie dies auch für das vorausgehende Ausführungsbeispiel beschrieben wurde.

Sinn dieser Doppelanordnung ist es, das zwischen Stator und Rotor wirkende Moment bei sonst gleichbleibenden Bedingungen zu verdoppeln. Zwar kann man eine solche Kraftverdoppelung auch dadurch erreichen, daß man bei einem Einzelmotor gemäß Fig. 1 entsprechend stärkere Permanentmagneten 52, 53 verwendet. Wegen des vergrößerten magnetischen Flusses würde dies aber einen grösseren Kerndurchmesser, in axialer Richtung vergrößerte Joche und einen dickeren Mantel erfordern. Für den dickeren Magneten steigt der Außendurchmesser der Anordnung vor allem dann überproportional an, wenn man preisgünstige Magneten verwenden will. Je nach Anwendungsfall kann es also durchaus vorteilhaft sein, statt eines Einzelmotors mit doppelt so kräftigem Permanentmagneten die in Fig. 5 gezeigte Doppelanordnung zu verwenden, um ein preisgünstiges Endprodukt zu erzielen. Es können in der hier gezeigten Weise auch mehr als zwei Elektromotoren 51, 51′ hintereinander angeordnet werden,

Ebenso wie in Fig. 1 besitzt der Mantel 76′ in Fig. 5 jeweils in der Mitte der axialen Länge der beiden Permanentmagnete 52, 52′ eine etwas geringere Wandstärke als zu den Endbereichen hin. Diese Material- und Gewichtseinsparung kann deswegen vorgenommen werden, weil in diesen zentralen Bereichen ein geringerer Magnetfluß geleitet werden muß als in den Endzonen. Weiterhin können sowohl in Fig. 1 als auch in Fig. 5 die ringförmigen Freiräume zwischen den inneren Mantelflächen der Permanentmagnete 52, 52′ und der Mantelfläche des Kerns 55′ mit nicht dargestellten Kunststoffkörpern ausgefüllt sein, die zur Lagerung und Führung des Kerns 55′ dienen. In den Spalten zwischen den Jochen 77, 77′ und 78 und dem Kern 55′ kann zur Erzielung der oben beschriebenen Vorteile eine ferromagnetische Flüssigkeit vorgesehen werden.

Es sei betont, daß außer den bisher geschilderten Elektromotoren weitere Realisierungsmöglichkeiten des Erfindungsgedankens bestehen.

So können beispielsweise quer zur Bewegungsrichtung verlaufende "Luftspalte" sowohl im Kern als auch im Mantel in derselben Querschnittsebene vorgesehen und diese beiden Teile für eine gemeinsame Relativbewegung zur Spulen-Magnet-Anordnung mechanisch miteinander verbunden werden. Der Vorteil einer solchen Anordnung liegt darin, daß auch der Spulenhauptfluß halbiert wird, wodurch der Kerndurchmesser weiter reduziert werden kann. Unter Spulenhauptfluß wird im vorliegenden Zusammenhang der Magnetfluß verstanden, der von der gesamten Spule über den gesamten Kern, die Joche und den gesamten Mantel getrieben wird. Der Spulenquerfluß ist dagegen ein Magnetfluß, der von der Spule oder Teilen von ihr über einen Teil des Kerns, über ein Joch, über einen Teil des Mantels und zumindest über einen Teil des Magneten getrieben wird.

Alternativ zu den beschriebenen Ausführungsformen kann die Spulenanordnung auch mehrere Spulen umfassen, von denen dann beispielsweise zwei an den Stirnenden der Magnetanordnung positioniert werden, während eine dritte den Magneten umschließt oder von diesem umschlossen wird.

## Patentansprüche

1. Elektrischer Rotationsmotor (51; 51′) mit einer Spulenanordnung (54, 56; 54′, 56′), durch die zur Erzeugung einer Relativbewegung zwischen einem Stator und einem Rotor ein elektrischer Strom fließt, einer mit der Spulenanordnung (54, 56; 54′, 56′) zumindest drehfest verbundenen Magnetanordnung (52, 53; 52′, 53′), deren Feld die Spulenanordnung durchsetzt, und mit wenigstens einem in den Feldern der Magnet- und Spulenanordnungen angeordneten Körper aus ferromagnetischem Material, der bezüglich der Spulen- und Magnetanordnungen um seine Längsachse drehbar gelagert ist und einen teils in Richtung dieser Längsachse und teils quer zu ihr verlaufenden Spalt (58; 58′) aufweist, der mit Material kleiner magnetischer Permeabilität gefüllt und so angeordnet ist, daß sich bei der Drehung des Körpers aus ferromagnetischem Material der magnetische Fluß in der Spulenanordnung (54, 56; 54′, 56′) ändert, dadurch **gekennzeichnet**, daß die Spulenanordnung (54, 56; 54′, 56′) wenigstens eine Spule (54 oder 56; 54′ oder 56′) umfaßt, die in Form eines hohlen Körpers ausgebildet ist, der einen durchgehenden Innenraum umschließt, daß die Magnetanordnung (52, 53; 52′, 53′) zwei teilzylindrische Magnete (52, 53 bzw. 52′, 53′) mit radialen Magnetisierungsrichtungen umfaßt, die konzentrisch zu einem Innenraum angeordnet sind, der mit dem Innenraum der wenigstens einen Spule (54 oder 56; 54′ oder 56′) koaxial angeordnet ist, und daß der Körper aus ferromagnetischem Material den Kern (55; 55′) der wenigstens einen Spule (54 oder 56; 54′ oder 56′) bildet und sich durch deren Innenraum sowie durch den Innenraum der Magnetanordnung (52, 53; 52′; 53′) erstreckt.

2. Elektrischer Rotationsmotor nach Anspruch 1, dadurch **gekennzeichnet**, daß die Magnetanordnung die Spulenanordnung von außen her umschließt.

3. Elektrischer Rotationsmotor nach Anspruch 1, dadurch **gekennzeichnet**, daß die Spulenanordnung die Magnetanordnung von außen her umschließt.

4. Elektrischer Rotationsmotor nach Anspruch 2 oder 3, dadurch **gekennzeichnet**, daß sowohl die Spulenanordnung als auch die Magnetanordnung jeweils die Form eines geraden Hohlzylinders mit kreisförmigem Innen- und Außenquerschnitt besitzt.

5. Elektrischer Rotationsmotor nach Anspruch 1, dadurch **gekennzeichnet**, daß die Spulenanordnung zwei gleichsinnig ansteuerbare Spulen (54, 56; 54′, 56′) umfaßt, von denen jede in Form eines Wickels ausgebildet ist, der einen durchgehenden Innenraum umschließt, daß die Spulen in Längsrichtung des Kerns (55; 55′) voneinander im Abstand angeordnet sind und daß die Magnetanordnung (52, 53; 52′, 53′; 82, 83) im Bereich zwischen den Spulen um den Kern (55; 55′) herum angeordnet und so ausgebildet ist, daß der von ihr ausgehende Fluß, der die Umfangsfläche des Kerns (55; 55′) quer zu dessen Längsrichtung durchsetzt im Inneren des Kerns (55; 55′) in dessen Längsrichtung umgelenkt wird.

6. Elektrischer Rotationsmotor nach einem der Ansprüche 1 bis 5, dadurch **gekennzeichnet**, daß ein Mantel (76; 76′) in Form eines länglichen Körpers vorgesehen ist, der zumindest teilweise aus ferromagnetischem Material besteht und die Spulen- und die Magnetanordnung von außen her umschließt, und daß wenigstens zwei Joche (77, 78; 77, 77′, 78) aus ferromagnetischem Material so ausgebildet und angeordnet sind, daß sie mit dem Mantel für den magnetischen Fluß, der den Kern (55; 55′) durchsetzt, eine Rückschlußanordnung mit definiertem magnetischen Widerstand bilden.

7. Elektrischer Rotationsmotor nach Anspruch 6, dadurch **gekennzeichnet**, daß die Joche (77, 78; 77, 77′, 78) mit dem Mantel (76; 76′) fest verbunden sind, daß der Mantel mit den Spulen- und Magnetanordnungen zumindest in Drehrichtung unbeweglich verbunden ist und daß die Joche in Längsrichtung durchgehende Öffnungen aufweisen, die eine Drehbewegung des sie durchsetzenden Kerns (55; 55′) ermöglichen, wobei die Spalte, die zwischen dem Kern (55; 55′) und den Jochen vorhanden sind, einen kleineren magnetischen Widerstand bilden, als der den Kern durchziehende Spalt (58; 58′).

8. Elektrischer Rotationsmotor nach einem der Ansprüche 1 bis 7, dadurch **gekennzeichnet**, daß jeder der wenigstens zwei Magnete (52, 53; 52′, 53′) den Kern (55; 55′) in etwa zur Hälfte umschließt und daß zu jedem betrachteten Zeitpunkt die Magnetisierungsrichtung wenigstens eines Magneten (52; 52′) von außen zum Kern (55; 55′) hin und wenigstens eines Magneten (53; 53′) vom Kern (55; 55′) weg nach außen gerichtet ist.

9. Elektrischer Rotationsmotor nach Anspruch 8, dadurch **gekennzeichnet**, daß wenigstens ein weiterer, nur einen kleinen Teil des Kernumfangs überdeckender Magnet (82, 83) vorgesehen ist, dessen Magnetisierungsrichtung so umpolbar ist, daß sie entweder der Magnetisierungsrichtung des einen oder der Magnetisierungsrichtung des anderen der beiden großen Magnete (52, 53) entspricht.

10. Elektrischer Rotationsmotor nach einem der Ansprüche 5, dadurch **gekennzeichnet**, daß der Spalt (58; 58′) sich in Längsrichtung des Kerns so weit erstreckt, daß er im zusammengebauten Zustand den axialen Abstand zwischen den beiden Spulen (54, 56; 54′, 56′) überbrückt.

11. Elektrischer Rotationsmotor nach einem der vorhergehenden Ansprüche, dadurch **gekennzeichnet**, daß die Magnetanordnung von Permanentmagneten gebildet wird.

12. Elektrischer Rotationsmotor nach einem der vorhergehenden Ansprüche, dadurch **gekennzeichnet**, daß der wenigstens eine Spalt (58; 58′) in dem Kern (55; 55′) aus ferromagnetischem Material mit einem festen Material niederer magnetischer Permeabilität gefüllt ist, das mit dem Kern aus ferromagnetischem Material einen Gesamtkörper mit kontinuierlichen Außenkonturen bildet.

13. Elektrischer Rotationsmotor nach einem der vorhergehenden Ansprüche, dadurch **gekennzeichnet**, daß Materialstärke und Form des Kerns, der Joche und des Mantels in den verschiedenen Querschnittsbereichen an den den jeweiligen Querschnittsbereich maximal durchsetzenden magnetischen Fluß so angepaßt sind, daß bei möglichst geringem Materialbedarf eine Sättigung vermieden wird.

14. Elektromotoranordnung die aus wenigstens zwei elektrischen Rotationsmotoren nach einem der vorhergehenden Ansprüche besteht, dadurch **gekennzeichnet**, daß die Spulen- und Magnetanordnungen der wenigstens zwei Elektromotoren alle zumindest in Richtung der Drehbewegung unbeweglich miteinander verbunden sind, daß ein für die wenigstens zwei Elektromotoren gemeinsamer Kern aus ferromagnetischem Material vorgesehen ist, der für jeden Elektromotor einen Spalt aufweist, und daß die Spulenanordnungen der wenigstens zwei Elektromotoren so angesteuert werden, daß die zwischen der Spulen- und Magnetanordnung eines jeden Elektromotors und dem gemeinsamen Körper aus ferromagnetischem Material auftretenden Kräfte zur Erzeugung einer Drehbewegung gleichsinnig wirken.

15. Elektromotoranordnung Anspruch 14, dadurch **gekennzeichnet**, daß die wenigstens zwei elektrischen Rotationsmotoren einen gemeinsamen Mantel aufweisen und wenigstens eines der Joche zwei Elektromotoren zugeordnet ist.

16. Verwendung einer elektrischen Rotationsanordnung nach einem der vorhergehenden Ansprüche als elektrischer Generator.

## Claims

1. An electric rotary motor (51; 51′) having a winding arrangement (54, 56; 54′, 56′) through which an electric current flows to produce a relative movement between a stator and a rotor, a magnet arrangement (52, 53; 52′, 53′) which is at least non-rotatably connected to the winding arrangement (54, 56; 54′, 56′) and whose field passes through the winding arrangement, and at least one body of ferromagnetic material which is arranged in the fields of the magnet and winding arrangements and which is mounted rotatably about its longitudinal axis with respect to the winding and magnet arrangements and has a gap (58; 58′) which extends partly in the direction of said longitudinal axis and partly transversely with respect thereto and which is filled with material of low magnetic permeability and which is so arranged that upon the rotary movement of the body of ferromagnetic material the magnetic flux in the winding arrangement (54, 56; 54′, 56′) changes, characterised in that the winding arrangement (54, 56; 54′, 56′) includes at least one winding (54 or 56; 54′ or 56′) which is in the form of a hollow body which encloses a continuous internal space, that the magnet arrangement (52, 53; 52′, 53′) includes two part-cylindrical magnets (52, 53 and 52′, 53′ respectively) with radial directions of magnetisation, which are arranged concentrically with respect to an internal space which is arranged coaxially with the internal space of the at least one winding (54 or 56; 54′ or 56′), and that the body of ferromagnetic material forms the core (55; 55′) of the at least one winding (54 or 56; 54′ or 56′) and extends through the internal space thereof and through the internal space of the magnet arrangement (52, 53; 52′; 53′).

2. An electric rotary motor according to claim 1 characterised in that the magnet arrangement embraces the winding arrangement from the outside.

3. An electric rotary motor according to claim 1 characterised in that the winding arrangement embraces the magnet arrangement from the outside.

4. An electric rotary motor according to claim 2 or claim 3 characterised in that both the winding arrangement and the magnet arrangement are each in the form of a right hollow cylinder of circular inside and outside cross-section.

5. An electric rotary motor according to claim 1 characterised in that the winding arrangement comprises two windings (54, 56; 54′, 56′) which can be actuated in the same direction and each of which is in the form of a coil which enclosed a continuous internal space, that the windings are arranged at a spacing from each other in the longitudinal direction of the core (55; 55′) and that the magnet arrangement (52, 53; 52′, 53′; 82, 83) is arranged in the region between the windings around the core (55; 55′) and is of such a configuration that the flux issuing therefrom which passes through the peripheral surface of the core (55; 55′) transversely to the longitudinal direction of the latter is deflected in the interior of the core (55; 55′) in the longitudinal direction thereof.

6. An electric rotary motor according to one of claims 1 to 5 characterised in that there is provided a casing (76; 76′) in the form of an elongate body which at least partially comprises ferromagnetic material and which embraces the winding and magnet arrangements from the outside and that at least two yokes (77, 78; 77, 77′, 78) of ferromagnetic material are of such a configuration and so arranged that with the casing for the magnetic flux which passes through the core (55; 55′) they form a return path arrangement of defined magnetic resistance.

7. An electric rotary motor according to claim 6 characterised in that the yokes (77, 78; 77, 77′, 78) are fixedly connected to the casing (76; 76′), that the casing is connected to the winding and magnet arrangements immovably at least in the direction of rotation and that the yokes have openings which are continuous in the longitudinal direction, which permit a rotary movement of the core (55; 55′) which passes through them, wherein the gaps between the core (55; 55′) and the yokes form a lower level of magnetic resistance than the gap (58; 58′) which passes through the core.

8. An electric rotary motor according to one of claims 1 to 7 characterised in that each of the at least two magnets (52, 53; 52′, 53′) embraces the core (55; 55′) approximately in respect of half thereof and that at any time being considered the magnetisation direction of at least one magnet (52; 52′) is directed from the outside towards the core (55; 55′) and that of at least one magnet (53; 53′) is directed from the core (55; 55′) outwardly.

9. An electric rotary motor according to claim 8 characterised in that there is provided at least one further magnet (82, 83) which covers only a small part of the periphery of the core and the direction of magnetisation of which can be switched over in such a way that it corresponds either to the direction of magnetisation of one of the two large magnets (52, 53) or the direction of magnetisation of the other of the two large magnets (52, 53).

10. An electric rotary motor according to claim 5 characterised in that the gap (58; 58′) extends in the longitudinal direction of the core to such an extent that in the assembled condition it bridges over the axial spacing between the two windings (54, 56; 54′, 56′).

11. An electric rotary motor according to one of the preceding claims characterised in that the magnet arrangement is formed by permanent magnets.

12. An electric rotary motor according to one of the preceding claims characterised in that the at least one gap (58; 58′) in the core (55; 55′) of ferromagnetic material is filled with a solid material of low magnetic permeability, which with the core of ferromagnetic material forms an overall body with continuous external contours.

13. An electric rotary motor according to one of the preceding claims characterised in that the thickness of material and shape of the core, the yokes and the casing in the various cross-sectional regions are so matched to the magnetic flux which passes through the respective cross-sectional region at the maximum that saturation is avoided with the minimum requirement of material.

14. An electric motor assembly comprising at least two electric rotary motors according to one of the preceding claims characterised in that the winding and magnet arrangements of the at least two electric motors are all connected together immovably at least in the direction of the rotary movement, that there is provided a common core of ferromagnetic material for the at least two electric motors, which core has a gap for each electric motor, and that the winding arrangements of the at least two electric motors are so actuated that the forces occurring between the winding and magnet arrangements of each electric motor and the common body of ferromagnetic material act in the same direction to produce a rotary movement.

15. An electric motor assembly according to claim 14 characterised in that the at least two electric rotary motors have a common casing and at least one of the yokes is associated with two electric motors.

16. Use of an electric rotary assembly according to one of the preceding claims as an electrical generator.

## Revendications

1. Moteur électrique rotatif (51, 51′) comportant un arrangement de bobine (54, 56 ; 54′, 56′) à travers lequel s'écoule un courant électrique pour créer un mouvement relatif entre un stator et un rotor, un arrangement d'aimant (52, 53 ; 52′, 53′) relié au moins fixement en rotation à l'arrangement de bobine (54, 56 ; 54′, 56′), le champ dudit arrangement d'aimant traversant l'arrangement de bobine, et comportant au moins un corps en matériau ferromagnétique disposé dans les champs des arrangements d'aimant et de bobine, ledit corps étant monté rotatif autour de son axe longitudinal par rapport aux arrangements de bobine et d'aimant et présentant une fente (58, 58′) s'étendant partiellement en direction de cet axe longitudinal et partiellement de manière oblique par rapport à lui, ladite fente étant remplie avec un matériau présentant une faible perméabilité magnétique et étant disposée de telle sorte que lors de la rotation du corps en matériau ferromagnétique, le flux magnétique se modifie dans l'arrangement de bobine (54, 56 ; 54′, 56′), caractérisé en ce que l'arrangement de bobine (54, 56 ; 54′, 56′) comporte au moins une bobine (54 ou 56 ; 54′ ou 56′) qui est réalisée sous la forme d'un corps creux qui entoure un espace intérieur traversant, en ce que l'arrangement d'aimant (52, 53 ; 52′, 53′) comprend deux aimants partiellement cylindriques (52, 53 respectivement 52′, 53′) ayant des directions de magnétisation radiales, qui sont disposés de manière concentrique à un espace intérieur qui est disposé coaxialement à l'espace intérieur de la au moins une bobine (54 ou 56 ; 54′ ou 56′), et en ce que le corps en matériau ferromagnétique forme le noyau (55, 55′) de la au moins une bobine (54 ou 56 ; 54′ ou 56′) et s'étend à travers son espace intérieur ainsi qu'à travers l'espace intérieur de l'arrangement d'aimant (52, 53 ; 52′, 53′).

2. Moteur électrique rotatif selon la revendication 1, caractérisé en ce que l'arrangement d'aimant entoure l'arrangement de bobines par l'extérieur.

3. Moteur électrique rotatif selon la revendication 1, caractérisé en ce que l'arrangement de bobine entoure l'arrangement d'aimant de l'extérieur.

4. Moteur électrique rotatif selon la revendication 2 ou 3, caractérisé en ce que, à la fois, l'arrangement de bobine et l'arrangement d'aimant présentent la forme d'un cylindre creux droit ayant des sections transversales intérieur et extérieure circulaires.

5. Moteur électrique rotatif selon la revendication 1, caractérisé en ce que l'arrangement de bobine comporte deux bobines (54 ou 56 ; 54′ ou 56′) actionnables dans le même sens, chacune desquelles étant réalisées sous la forme d'un bobinage qui entoure un espace intérieur traversant, en ce que les bobines sont disposées en éloignement l'une de l'autre dans la direction longitudinale du noyau (55, 55′), et en ce que l'arrangement d'aimant (52, 53 ; 52′, 53′; 82, 83), dans la zone située entre les bobines, est disposé autour du noyau (55, 55′) et est formé de telle sorte que le flux sortant dudit arrangement, qui traverse la surface de contour du noyau (55, 55′) transversalement à la direction longitudinale de celui-ci, est dévié à l'intérieur du noyau (55, 55′) dans la direction longitudinale de celui-ci.

6. Moteur électrique rotatif selon l'une quelconque des revendications 1 à 5, caractérisé en ce qu'une enveloppe (76, 76′) en forme d'un corps allongé est prévue, ladite enveloppe étant constituée au moins partiellement de matériaux ferromagnétiques et entourant les arrangements de bobine et d'aimant de l'extérieur, et en ce qu'au moins deux culasses (77, 78 ; 77, 77′, 78) en matériau ferromagnétique sont formées et disposées de telle sorte qu'elles forment avec l'enveloppe un arrangement d'arrêt de retour ayant une résistance magnétique définie pour le flux magnétique qui traverse le noyau (55, 55′).

7. Moteur électrique rotatif selon la revendication 6, caractérisé en ce que les culasses (77, 78 ; 77, 77′, 78) sont reliées fixement à l'enveloppe (76, 76′), en ce que l'enveloppe est reliée fixement au moins dans la direction de rotation avec les arrangements de bobine et d'aimant et en ce que les culasses présentent des ouvertures traversantes en direction longitudinale qui permettent un mouvement de rotation du noyau (55, 55′) qui les traversent, les fentes qui sont présentes entre le noyau (55, 55′) et les culasses formant une résistance magnétique plus petite que la fente (58, 58′) traversant le noyau.

8. Moteur électrique rotatif selon la revendication 1 à 7, caractérisé en ce que chacun des au moins deux aimants (52, 53 ; 52′, 53′) entoure environ à moitié le noyau (55, 55′), et en ce que, à chaque instant considéré, la direction de magnétisation d'au moins un aimant (52, 52′) est dirigée de l'extérieur en direction du noyau (55, 55′) et la direction de magnétisation d'au moins un aimant (53, 53′) est dirigée du noyau (55, 55′) en direction de l'extérieur.

9. Moteur électrique rotatif selon la revendication 8, caractérisé en ce qu'il est prévu au moins un aimant supplémentaire (82, 83) recouvrant seulement une petite partie de la circonférence du noyau, dont la polarité de la direction de magnétisation peut être inversée de sorte qu'elle corresponde soit à la direction de magnétisation de l'un soit à la direction de magnétisation de l'autre des deux gros aimants (52, 53).

10. Moteur électrique rotatif selon la revendication 5, caractérisé en ce que la fente (58, 58′) s'étend en direction longitudinale du noyau d'une telle distance qu'il dépasse à l'état monté l'espacement axial entre les deux bobines (54 ou 56 ; 54′ ou 56′).

11. Moteur électrique rotatif selon l'une quelconque des revendications précédentes, caractérisé en ce que l'arrangement d'aimant est formé d'aimants permanents.

12. Moteur électrique rotatif selon l'une quelconque des revendications précédentes, caractérisé en ce qu'au moins une fente (58, 58′) dans le noyau (55, 55′) en matériau ferromagnétique est remplie avec un matériau solide ayant une faible perméabilité magnétique qui forme avec le noyau un corps global avec un profil extérieur continu.

13. Moteur électrique rotatif selon l'une quelconque des revendications précédentes, caractérisé en ce que l'épaisseur de matériau et la forme du noyau, des culasses, et de l'enveloppe dans les différentes zones de section transversale sont adaptées au flux magnétique maximal traversant la zone de section transversale respective de telle sorte qu'avec une utilisation de matériau la plus faible possible une saturation est évitée.

14. Arrangement de moteur électrique comprenant au moins deux moteurs électriques rotatifs selon l'une quelconque des revendications précédentes, caractérisé en ce que les arrangements de bobine et d'aimant desdits au moins deux moteurs électriques sont tous reliés ensemble de manière fixe au moins en direction du déplacement en rotation, en ce qu'un noyau commun en matériau ferromagnétique est prévu pour lesdits au moins deux moteurs électriques, ledit noyau présentant une fente pour chacun des moteurs électriques, et en ce que les arrangements de bobine des au moins deux moteurs électriques sont commandés de telle sorte que les forces générées entre les arrangements de bobine et d'aimant de chaque moteur électrique et le noyau commun en matériau ferromagnétique agissent pour produire un déplacement en rotation dans le même sens.

15. Arrangement de moteur électrique selon la revendication 14, caractérisé en ce que lesdits au moins deux moteurs électriques rotatifs présentent une enveloppe commune et en ce qu'il est associé deux moteurs électriques à au moins une des culasses.

16. Utilisation d'un arrangement de moteur électrique rotatif selon l'une des revendications précédentes en tant que générateur électrique.
